(19) Europäisches Patentamt
European Patent Office
Office européen des brevets

(11) EP 4 259 719 B1

(12) **EUROPEAN PATENT SPECIFICATION**

(45) Date of publication and mention of the grant of the patent:
**01.07.2026 Bulletin 2026/27**

(21) Application number: **21815206.4**

(22) Date of filing: **25.11.2021**

(51) International Patent Classification (IPC):
***C08L 23/14*** *(2006.01)* ***C08F 2/00*** *(2006.01)*
***C08F 210/06*** *(2006.01)* ***E04D 5/06*** *(2006.01)*
***B32B 27/32*** *(2006.01)* ***B32B 5/02*** *(2006.01)*
***B32B 27/12*** *(2006.01)*

(52) Cooperative Patent Classification (CPC):
(C-Sets available)
**B32B 5/022; B32B 5/024; B32B 27/12;**
**B32B 27/32; C08F 210/06; C08L 23/14; E04D 5/06;**
B32B 2250/03; B32B 2250/40; B32B 2262/0253;
B32B 2262/0284; B32B 2270/00; B32B 2307/536;
B32B 2307/54; B32B 2307/558; (Cont.)

(86) International application number:
**PCT/EP2021/082904**

(87) International publication number:
**WO 2022/128379 (23.06.2022 Gazette 2022/25)**

(54) **ULTRASOFT POLYOLEFIN COMPOSITION**

ULTRAWEICHE POLYOLEFINZUSAMMENSETZUNG

COMPOSITION DE POLYOLÉFINE ULTRADOUCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2020 EP 20213683**

(43) Date of publication of application:
**18.10.2023 Bulletin 2023/42**

(73) Proprietor: **Basell Poliolefine Italia S.r.l.**
**20121 Milano (IT)**

(72) Inventors:
- **GRAZZI, Michele**
**44122 Ferrara (IT)**
- **GALVAN, Monica**
**44122 Ferrara (IT)**
- **BIONDINI, Gisella**
**44122 Ferrara (IT)**
- **CIARAFONI, Marco**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-03/076509 US-A1- 2005 222 314**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 259 719 B1

(52) Cooperative Patent Classification (CPC): (Cont.)
B32B 2307/5825; B32B 2419/06; C08L 2203/16; C08L 2205/03; C08L 2207/02

C-Sets
**C08F 210/06, C08F 2/001;**
**C08F 210/06, C08F 2/34;**
**C08L 23/14, C08L 23/14, C08L 23/14;**
C08F 210/06, C08F 210/16, C08F 210/14, C08F 2500/35, C08F 2500/27, C08F 2500/12, C08F 2500/17, C08F 2500/30, C08F 2500/31;
C08F 210/06, C08F 210/16, C08F 2500/35, C08F 2500/27, C08F 2500/12, C08F 2500/17, C08F 2500/30, C08F 2500/31

## Description

### FIELD OF THE INVENTION

The present disclosure relates to a soft thermoplastic polyolefin composition that can be used for the preparation of sheets or membranes having good mechanical properties. The sheets or membranes are particularly suitable for roofing applications.

### BACKGROUND OF THE INVENTION

Both elastomers and thermoplastic polyolefins are largely used in the art to produce sheets and membranes for roofing or for use as geomembranes.

Traditionally, polyvinyl chloride (PVC) and other chlorinated TPOs were used to prepare heat-weldable thermoplastic roofing sheets. However, PVC requires plasticizers to have the flexibility needed for roofing applications. The aging of membranes through plasticizers loss and the presence of chlorine in the polymer chains were the drivers for the substitution of PVC with chlorine-free thermoplastic polyolefins having the required mechanical properties in absence of plasticizers.

Heterophasic polyolefin compositions are used to prepare sheets or membranes for roofing applications, the compositions being heat-weldable, flexible and easily recyclable.

WO03/076509 discloses a polyolefin composition for roofing applications comprising: (A) 15-40 wt.% of a crystalline copolymer of propylene and (B) 60-85 wt.% of an elastomeric fraction comprising a copolymer of propylene with ethylene and a copolymer of ethylene with alpha-olefins. The compositions show high tenacity, flexural modulus below 130 MPa and Shore D hardness lower than 40.

Soft and flexible polyolefin compositions for roofing and for producing geomembranes are known from WO2009/080485 disclosing a composition comprising: (A) 10-40 wt.% of a propylene/hexene-1 copolymer containing 2.5-10 wt.% of hexene-1 and having melt flow rate of 0.5-100 g/10min, and (B) 60-85 wt.% of an ethylene copolymer containing 40 wt.% or less of ethylene and having solubility in xylene higher than 70 wt.%. US2005/222314A1 discloses heterophasic polyolefin compositions for roofing applications.

Blends of heterophasic polyolefin compositions with elastomers, particularly with polyolefin based elastomers (POE), having good balance of mechanical properties are also known for use in roofing applications.

The international patent application WO98/37144 discloses soft elastomeric thermoplastic polyolefin compositions comprising an heterophasic olefin polymer (I) and an elastomeric polymer (II) having hardness equal to or less than 90 points. The elastomeric copolymer can be selected among ethylene copolymers containing 20-70wt.% of alpha-olefin, the alpha-olefin being preferably butene-1 or octene-1.

The patent application WO2015/055433 discloses a filled polyolefin composition comprising (a) a flexible heterophasic polyolefin, (b) an inorganic filler selected from flamer-retardants, oxides and salts and (c) a butene-1 copolymer having flexural modulus lower than 60 MPa, Shore A lower than 90 and Tg lower than -20°C.

Polyolefin compositions comprising 40-75 wt.% of at least one polypropylene based elastomer and 25-60 wt.% of at least one random propylene copolymer with a flexural modulus lower than 650 MPa are known from US Patent 9,434,827B2.

The US patent 10,669,414 B2 discloses soft membranes comprising 20-50 wt.% of a propylene-based elastomer composition comprising an overall ethylene amount of 16-18 wt.%, 20-40 wt.% of an impact copolymer, at least one magnesium hydroxide masterbatch and at least one UV stabilizer.

In this context, there is still the need of soft and flexible polyolefin compositions with an appropriate balance of physical-mechanical properties and good processability, which are particularly suited for preparing roofing sheets or membranes.

### SUMMARY OF THE INVENTION

The present disclosure provides a polyolefin composition comprising:

(I) 50-95% by weight of an heterophasic polyolefin composition comprising:

(A) 10-40% by weight, of a propylene polymer selected from propylene homopolymers or copolymers of propylene with at least one alpha-olefin of formula $CH_2$=CHR, where R is H or a linear or branched C2-C8 alkyl, the copolymer comprising 1.0-6.0% by weight, based on the weight of (A), of units deriving from the alpha-olefin and having melt flow rate ($MFR_A$) measured according to ISO 1133, 230°C, 2.16 kg ranging from 20 to 60 g/10 min.; and

(B) 60-90% by weight, of a copolymer of propylene with at least one alpha-olefin of formula $CH_2$=CHR, and optionally a diene, where R is H or a linear or branched C2-C8 alkyl and wherein the copolymer comprises 20-35% by weight, based on the weight of (B), of units deriving from the alpha-olefin,

wherein the fraction of the heterophasic polyolefin composition (I) soluble in xylene at 25°C (XS(I)) is equal to or higher than 60% by weight, the amounts of (A), (B) and XS(I) being based on the total weight of (A)+(B);
and
(II) 5-50 % by weight of a propylene-ethylene copolymer comprising 12-25% by weight of units deriving from ethylene, based on the weight of the propylene-ethylene copolymer,

wherein the amounts of (I) and (II) are based on the total weight of (I)+(II).

The present disclosure also provides a method for improving softness of an heterophasic polyolefin composition comprising a propylene polymer matrix (A) and an elastomeric component (B), the method comprising adding, preferably melt blending, to the heterophasic polyolefin composition 5-50 % by weight, based on the final polyolefin composition, of a propylene-ethylene copolymer comprising 12-25% by weight of units deriving from ethylene, based on the weight of the propylene-ethylene copolymer.

The present disclosure also provides a sheet or membrane comprising a polyolefin composition comprising:

(I) 50-95% by weight of an heterophasic polyolefin composition comprising:

(A) 10-40% by weight, of a propylene polymer selected from propylene homopolymers or copolymers of propylene with at least one alpha-olefin of formula CH2=CHR, where R is H or a linear or branched C2-C8 alkyl, the copolymer comprising 1.0-6.0% by weight, based on the weight of (A), of units deriving from the alpha-olefin and having melt flow rate ($MFR_A$) measured according to ISO 1133, 230°C, 2.16 kg ranging from 20 to 60 g/10 min.; and
(B) 60-90% by weight, of a copolymer of propylene with at least one alpha-olefin of formula CH2=CHR, and optionally a diene, where R is H or a linear or branched C2-C8 alkyl and wherein the copolymer comprises 20-35% by weight, based on the weight of (B), of units deriving from the alpha-olefin,

wherein the fraction of the heterophasic polyolefin composition (I) soluble in xylene at 25°C (XS(I)) is equal to or higher than 60% by weight, the amounts of (A), (B) and XS(I) being based on the total weight of (A)+(B);
and
(II) 5-50 % by weight of a propylene-ethylene copolymer comprising 12-25% by weight, based on the weight of the propylene-ethylene copolymer, of units deriving from ethylene.

wherein the amounts of (I) and (II) are based on the total weight of (I)+(II).

The polyolefin composition of the present disclosure shows a good balance of mechanical properties, in particular of flexibility and softness, at the same time retaining good elastic properties and having remarkable puncture and tear resistance.

The polyolefin composition has reduced stickiness and it is easily processable into sheets or membranes, particularly into sheets suited for roofing applications or into membranes suited for producing geomembranes.

The sheets or membranes comprising the polyolefin composition of the present disclosure are soft, flexible and easy to install.

## DETAILED DESCRIPTION OF THE INVENTION

In the present description and in the appended claims, the percentages are expressed by weight, unless otherwise specified.

In the context of the present description and of the appended claims, when the term "comprising" is referred to a polymer or to a polyolefin composition, it should be construed to mean "comprising or consisting essentially of".

In the context of the present disclosure, the term "consisting essentially of" means that, in addition to those components which are mandatory, other components may also be present in a polymer or in a polyolefin composition, provided that the essential characteristics of the polymer or of the composition are not materially affected by their presence. Examples of components that, when present in customary amounts in a polymer or in a polyolefin composition, do not materially affect their characteristics are catalyst residues, antistatic agents, melt stabilizers, light stabilizers, antioxidants, antiacids.

The heterophasic polyolefin composition (I) preferably comprises 15-35% by weight, more preferably 20-30% by weight of propylene polymer (A) and preferably 65-85% by weight, more preferably 70-80% by weight of propylene

copolymer (B), the amounts of (A) and (B) being based on the total weight of (A)+(B).

The propylene polymer (A) is preferably a propylene copolymer comprising 1.0-6.0% by weight, preferably 2.0-5.0% by weight, more preferably 2.8-4.8% by weight, still more preferably 3.0-4.0% by weight, based on the weight of the propylene polymer (A), of units deriving from an alpha-olefin of formula $CH_2$=CHR, where R is H or a linear or branched C2-C8 alkyl.

The alpha-olefin comprised in propylene polymer (A) is preferably selected from the group consisting of ethylene, butene-1, hexene-1, 4-methy-pentene-1, octene-1 and combinations thereof.

In one embodiment, the propylene polymer (A) is a propylene copolymer with hexene-1 comprising 1.0-6.0% by weight, preferably 2.0-5.0% by weight, more preferably 2.8-4.8% by weight, more preferably 3.0-4.0% by weight, of units deriving from hexene-1, based on the weight of the propylene polymer (A).

In one embodiment, the propylene polymer (A) is a propylene copolymer with ethylene comprising 2.0-4.0% by weight, preferably 3.0-3.9% by weight, of units deriving from ethylene, based on the weight of the propylene polymer (A).

The propylene polymer (A) preferably has melt flow rate ($MFR_A$) measured according to ISO 1133, 230°C, 2.16 kg ranging from 25 to 55 g/10 min., preferably from 25 to 50 g/10 min.

In one embodiment, the propylene polymer (A) is a propylene copolymer with hexene-1 having melt flow rate ($MFR_A$) measured according to ISO 1133, 230°C, 2.16 kg ranging from 25 to 55 g/10 min., preferably from 25 to 50 g/10 min.

In one embodiment, the propylene polymer (A) is a propylene copolymer with ethylene having melt flow rate ($MFR_A$) measured according to ISO 1133, 230°C, 2.16 kg ranging from 35 to 50 g/10 min., preferably from 40 to 50 g/10 min., more preferably from 42 to 48 g/10 min.

The propylene polymer (A), preferably of the propylene copolymer (A), comprises preferably an amount of fraction soluble in xylene at 25°C ($XS_A$) lower than 12.0% by weight, based on the weight of the propylene polymer (A), preferably lower than 9.0% by weight; more preferably $XS_A$ is comprised in the range 5.0-12.0% by weight, preferably 6.0-9.0% by weight, more preferably 6.0-8.0% by weight.

Preferably, the propylene copolymer (B) comprises from 25 to 35% by weight, based on the weight of copolymer (B), of units deriving from the at least one alpha-olefin.

Preferably, the propylene copolymer (B) has molecular weight distribution Mw/Mn(B) greater than 3.5, preferably ranging from greater than 3.5 to 8.0.

The propylene copolymer (B) preferably comprises an amount of fraction soluble in xylene at 25°C ($XS_B$) higher than 80% by weight, based on the total weight of the propylene copolymer (B), preferably higher than 85% by weight, more preferably higher than 90% by weight.

The upper limit of the amount of the fraction of propylene polymer (B) that is soluble in xylene at 25°C ($XS_B$) is preferably 97% by weight for each lower limit, based on the total weight of the propylene copolymer (B).

In some embodiments, the propylene copolymer (B) comprises a first copolymer (B1) and a second copolymer (B2) of propylene with at least one alpha-olefin of formula $CH_2$=CHR, and optionally a diene, where R is H or a linear or branched C2-C8 alkyl, provided that the total amount of alpha-olefin comprised in the propylene copolymer (B) is 20-35% by weight, preferably from 25 to 35% by weight, based on the total weight of propylene copolymer (B).

In one embodiment, the propylene copolymer (B) comprises:

(B1) 30-60% by weight, preferably 40-55% by weight, of a first copolymer of propylene with at least one alpha-olefin of formula $CH_2$=CHR, and optionally a diene, where R is H or a linear or branched C2-C8 alkyl, and wherein the first propylene copolymer comprises 20-40% by weight, preferably 25-35% by weight of alpha-olefin and a fraction soluble in xylene at 25°C ($XS_{B1}$) higher than 80% by weight, preferably higher than 85% by weight, more preferably higher than 90% by weigh, the amount of alpha-olefin and of $XS_{B1}$ are based on the weight of component (B1); and

(B2) 40-70% by weight, preferably 45-60% by weight, of a second copolymer of propylene with at least one alpha-olefin of formula $CH_2$=CHR, and optionally a diene, where R is H or a linear or branched C2-C8 alkyl, and wherein the second propylene copolymer comprises 25-45% by weight, preferably 30-43% by weight of alpha-olefin and a fraction soluble in xylene at 25°C ($XS_{B2}$) higher than 80% by weight, preferably higher than 85% by weight, more preferably higher than 90% by weigh, the amount of alpha-olefin and of $XS_{B2}$ are based on the weight of component (B2),

wherein the amounts of (B1) and (B2) are based on the total weight of the propylene copolymer (B), provided that the total amount of alpha-olefin comprised in the propylene copolymer (B) is 20-35% by weight, preferably from 25 to 35% by weight, based on the total weight of propylene copolymer (B).

The upper limit of the amount of the fraction of component (B1) and/or of the component (B2) that is soluble in xylene at 25°C ($XS_{B1}$ and/or $XS_{B2}$) is preferably 97% by weight for each lower limit, the amounts of $XS_{B1}$ and $XS_{B2}$ being based on the weight of component (B1) and (B2) respectively.

In one preferred embodiment, the upper limit of $XS_{B1}$ and of $XS_{B2}$ is 97% by weight for each lower limit, the amounts of $XS_{B1}$ and $XS_{B2}$ being based on the weight of component (B1) and (B2) respectively.

The at least one alpha-olefin comprised in propylene copolymer (B), or in components (B1) and (B2), is independently selected from the group consisting of ethylene, butene-1, hexene-1, 4-methy-pentene-1, octene-1 and combinations thereof. In a preferred embodiment, the alpha-olefin is ethylene.

Optionally, the propylene copolymer (B), or any one of components (B1) or (B2) when present, can comprise recurring units derived from a diene, being preferably independently selected from the group consisting of butadiene, 1,4-hexadiene, 1,5-hexadiene, ethylidene-1-norbonene and combinations thereof.

In some embodiments, the total amount of recurring units deriving from a diene comprised in the propylene copolymer (B) ranges from 1 to 10% by weight, based on the weight of the propylene copolymer (B).

The fraction of the heterophasic polyolefin composition (I) soluble in xylene at 25°C (XS(I)) is preferably higher than 65% by weight, more preferably higher that 70% by weight, preferably ranging from 71 to 90% by weight, more preferably ranging from 72 to 80% by weight, based on the total weight of (A)+(B).

The fraction soluble in xylene at 25°C of the heterophasic polyolefin composition (I) has intrinsic viscosity XSIV(I) ranging from 2.0 to 5.5 dl/g, preferably 2.5 to 4.5 dl/g, more preferably from 3.1 to 3.9 dl/g.

The heterophasic polyolefin composition (I) preferably has melt flow rate MFR(I) measured according to ISO 1133, 230°C, 2.16 kg ranging from 0.2 to 6.0 g/10 min., preferably from 0.2 to 2.0 g/10 min., more preferably from 0.2 to 1.5 g/10 min., more preferably from 0.25 to 1.00 g/10 min.

In one embodiment, the melt flow rate MFR(I) of the heterophasic polyolefin composition (I) ranges from 0.2 to 6.0 g/10 min., preferably from 0.2 to 2.0 g/10 min., preferably from 0.2 to 1.5 g/10 min., preferably from 0.25 to 1.00 g/10 min. and is measured according to ISO 1133, 230°C, 2.16 kg on the heterophasic polyolefin composition (I) obtained directly from polymerization.

In one embodiment, the melt flow rate MFR(I) of the heterophasic polyolefin composition (I) measured according to ISO 1133, 230°C, 2.16 kg ranging from 0.2 to 6.0 g/10 min., preferably from 0.2 to 2.0 g/10 min., preferably from 0.2 to 1.5 g/10 min., preferably from 0.25 to 1.00 g/10 min. is not obtained by degrading (visbreaking) the heterophasic polyolefin composition (I) obtained from the polymerization reaction.

In a preferred embodiment of the present disclosure, the heterophasic polyolefin composition (I) comprises:

(A) 10-40% by weight, 15-35% by weight, preferably 20-30% by weight of a copolymer of propylene with hexene-1 comprising 1.0-6.0% by weight, based on the weight of (A), preferably 2.0-5.0% by weight, preferably 2.8-4.8% by weight, more preferably 3.0-4.0% by weight, of hexene-1 and having melt flow rate ($MFR_A$) measured according to ISO 1133, 230°C, 2.16 kg ranging from 20 to 60 g/10 min., preferably from 25 to 55 g/10 min., more preferably from 25 to 50 g/10 min.; and

(B) 60-90% by weight, 65-85% by weight, preferably 70-80% by weight, of a copolymer of propylene with ethylene comprising 20-35% by weight of ethylene, preferably 25-35% by weight, based on the total weight of (B),

wherein

i) the fraction of the heterophasic polyolefin composition (I) soluble in xylene at 25°C XS(I) is higher than 60% by weight, preferably higher than 65% by weight, more preferably higher than 70% by weight, more preferably XS(I) ranges from 71 to 90% by weight, preferably from 72 to 80% by weight and wherein the amounts of (A) and (B) and XS(I) are based on the total weight of (A)+(B); and

ii) the melt flow rate (MFR(I)) of the heterophasic polyolefin composition (I) measured according to ISO 1133, 230°C, 2.16 kg ranges from 0.2 to 6.0 g/10 min., preferably from 0.2 to 2.0 g/10 min., preferably from 0.2 to 1.5 g/10 min., preferably from 0.25 to 1.00 g/10 min.

In a further preferred embodiment of the present disclosure, the heterophasic polyolefin composition (I) comprises:

(A) 18-35% by weight, preferably 20-30% by weight, of a copolymer of propylene with ethylene comprising 2.0-4.0% by weight of ethylene, preferably 3.0-3.9% by weight, the amount of ethylene being based on the weight of (A) and having melt flow rate ($MFR_A$) measured according to ISO 1133, 230°C, 2.16kg ranging from 30 to 60 g/10 min., preferably from 35 to 50 g/10 min., more preferably from 40 to 50 g/10 min., still more preferably from 42 to 48 g/10min; and

(B) 65-82% by weight, preferably 70-80% by weight, of a copolymer of propylene with ethylene comprising 20-35% by weight of ethylene, preferably 25-35% by weight, the amount of ethylene being based on the weight of (B),

wherein

i) the fraction of the heterophasic polyolefin composition (I) soluble in xylene at 25°C XS(I) is higher than 70% by

weight, preferably ranging from 70 to 90% by weight, more preferably from 70 to 80% by weight and wherein the amounts of (A), (B) and of the fraction soluble in xylene at 25°C XS(I) are based on the total weight of (A)+(B); and
ii) the melt flow rate MFR(I) measured according to ISO 1133, 230°C, 2.16kg of the heterophasic polyolefin composition (I) ranges from 0.2 to 2.0 g/10min., preferably from 0.3 to 1.5 g/10min., more preferably from 0.4 to 1.0 g/10min., the value of MFR(I) being measured on the heterophasic polyolefin composition (I) obtained directly from polymerization; and
iii) the fraction soluble in xylene at 25°C of the polyolefin composition has intrinsic viscosity XSIV(I) ranging from 2.5 to 4.5 dl/g, preferably from 3.0 to 3.9 dl/g.

The heterophasic polyolefin composition (I) preferably has at least one of the following properties measured on injection molded specimens:

- Flexural Modulus ranging from 50 to 90 MPa, preferably from 60 to 85 MPa, more preferably from 65 to 80 MPa, measured according to ISO 178:2019; and/or
- Strength at break greater than or equal to 9.0 MPa, measured according to the method ISO 527. The strength at break is preferably comprised in the range 9.0-15.0 MPa, more preferably 10.0-15.0 MPa, still more preferably 11.0-15.0 MPa; and/or
- Elongation at break, determined according to the method ISO 527, comprised in the range 350-550%; and/or
- Vicat softening temperature, determined according to the method ISO 306 (A50), comprised in the range 40°-60°C; and/or
- Charpy resistance at -40°C equal to or higher than 6.0 $KJ/m^2$, measured according to ISO 179/1eA 2010. The Charpy resistance at -40°C is preferably comprised in the range 6.0 - 10.0 $KJ/m^2$; and/or
- Shore A value, determined according to the method ISO 868 (15 sec), comprised in the range 70-90; and/or
- Shore D value, determined according to the method ISO 868 (15 sec), comprised in the range 23-30.

Preferably the heterophasic polyolefin composition (I) is also endowed with at least one of the following properties, measured on 1mm-thick extruded sheets:

- tensile modulus lower than 70.0 MPa, preferably lower than 60.0 MPa, more preferably lower than 50 MPa in MD and/or TD, preferably in MD and TD, determined according to the method ISO 527-3 (specimens type 2, Crosshead speed: 1 mm/min). More preferably, the tensile modulus in MD and/or TD, preferably in MD and TD, is comprised in the range 30.0-70.0 MPa, preferably 30.0-60.0 MPa; and/or
- strength at break greater than 14.0 MPa, preferably greater than 15.0 MPa, in MD and/or TD, preferably in MD and TD, determined according to the method ISO527-3 (Specimens type: 5, Crosshead speed: 500 mm/min). More preferably, the strength at break in MD and/or TD, preferably in MD and TD, is comprised in the range 14.0-20.0 MPa, preferably 15.0-18.0 MPa; and/or
- elongation at break in MD and/or TD, preferably in MD and TD, determined according to the method ISO527-3 (Specimens type: 5, Crosshead speed: 500 mm/min), comprised in the range 600-800%; and/or
- tear resistance in MD and/or TD, preferably in MD and TD, determined according to the method ASTM D 1004 (Crosshead speed: 51 mm/min; V-shaped die cut specimen), comprised in the range 40-70 N, preferably 50-65 N; and/or
- puncture deformation greater than or equal to 40 mm, preferably greater than or equal to 45 mm, measured according to method ASTM D 4833 (punch diameter: 8 mm, crosshead speed: 300 mm/min). More preferably, the puncture deformation is comprised in the range 40-60 mm, preferably 45-60 mm; and/or
- puncture resistance greater than 170 N, preferably greater than 200 N, measured according to method ASTM D 4833 (punch diameter: 8 mm, crosshead speed: 300 mm/min). More preferably, the puncture resistance is comprised in the range 170-250 N, preferably 200-250 N; and/or
- Shore A value lower than 90, measured according to method ISO 868 (15 sec). Preferably, the Shore A value is comprised in the range 70-90; and/or
- Shore D value equal to or lower than 30, measured according to method ISO 868 (15 sec). Preferably, the Shore D value is comprised in the range 23-30.

In one embodiment, the heterophasic polyolefin composition (I) is endowed with all the properties described above measured on injection molded and extruded sheets.
The heterophasic polyolefin composition (I) can be a melt blend or a reactor blend of (A) and (B).
The heterophasic polyolefin composition (I) is preferably a reactor blend prepared by sequential polymerization in at least two stages, wherein the second and each subsequent polymerization stage is carried out in the presence of the polymer produced in the immediately preceding polymerization stage.

In some embodiments, the polymerization processes to prepare the single components (A) and (B) or the sequential polymerization process to prepare the heterophasic polyolefin composition (I) are carried out in the presence of a catalyst selected from metallocene compounds, highly stereospecific Ziegler-Natta catalyst systems and combinations thereof.

Preferably, the polymerization processes to prepare the single components (A) and (B) or the sequential polymerization process to prepare the heterophasic polyolefin composition (I) are carried out in the presence of a highly stereospecific Ziegler-Natta catalyst system comprising:

(1) a solid catalyst component comprising a magnesium halide support on which a Ti compound having at least a Ti-alogen bond is present, and a stereoregulating internal donor;
(2) optionally, but preferably, an Al-containing cocatalyst; and
(3) optionally, but preferably, a further electron-donor compound (external donor).

In some preferred embodiments, the solid catalyst component (1) comprises a titanium compound of formula $Ti(OR)_nX_{y_n}$, wherein n is comprised between 0 and y; y is the valence of titanium; X is halogen and R is a hydrocarbon group having 1-10 carbon atoms or a -COR group. Among them, particularly preferred are titanium compounds having at least one Ti-halogen bond such as titanium tetrahalides or titanium halogenalcoholates. Preferred specific titanium compounds are $TiCl_3$, $TiCl_4$, $Ti(OBu)_4$, $Ti(OBu)Cl_3$, $Ti(OBu)_2Cl_2$, $Ti(OBu)_3Cl$. $TiCl_4$ is particularly preferred.

In one embodiment, the solid catalyst component (1) comprises a titanium compound in an amount securing the presence of from 0.5 to 10% by weight of Ti with respect to the total weight of the solid catalyst component (1).

The solid catalyst component (1) comprises at least one stereoregulating internal electron donor compound selected from mono or bidentate organic Lewis bases, preferably selected from esters, ketones, amines, amides, carbamates, carbonates, ethers, nitriles, alkoxysilanes and combinations thereof.

Particularly preferred are the electron donors belonging to aliphatic or aromatic mono- or dicarboxylic acid esters and diethers.

Among alkyl and aryl esters of optionally substituted aromatic polycarboxylic acids, preferred donors are the esters of phthalic acids such as those described in EP45977A2 and EP395083A2.

In some embodiments, the internal donor is selected from the group consisting of mono- or di-substituted phthalates, wherein the substituents are independently selected among linear or branched $C_{1-10}$ alkyl, $C_{3-8}$ cycloalkyl and aryl radicals.

In some preferred embodiments, the internal donor is selected among di-isobutyl phthalate, di-n-butyl phthalate, di-n-octyl phthalate, diphenyl phthalate, benzylbutyl phthalate and combinations thereof. In one embodiment, the internal donor is di-isobutyl phthalate.

Esters of aliphatic acids can be selected from esters of malonic acids such as those described in WO98/056830, WO98/056833, WO98/056834, esters of glutaric acids such as those disclosed in WO00/55215, and esters of succinic acids such as those disclosed WO00/63261.

Particular type of diesters are those deriving from esterification of aliphatic or aromatic diols such as those described in WO2010/078494 and USP 7,388,061.

In some embodiments, the internal donor is selected from 1,3-diethers of formula

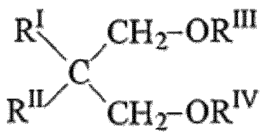

(I)

wherein $R^I$ and $R^{II}$ are independently selected from $C_{1-18}$ alkyl, $C_{3-18}$ ccycloalkyl and $C^{7-18}$ aryl radicals, $R^{III}$ and $R^{IV}$ are independently selected from $C_{1-4}$ alkyl radicals; or the carbon atom in position 2 of the 1,3-diether belongs to a cyclic or polycyclic structure made up of from 5 to 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structures), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures, wherein one or more of the above mentioned alkyl, cycloalkyl, aryl, aralkyl, or alkaryl radicals and the condensed cyclic structures optionally contain one or more heteroatom(s) as substitutes for carbon and/or hydrogen atoms. Ethers of this type are described in EP361493, EP728769 and WO02/100904.

When 1,3-diethers described above are used, the external electron donor (3) can be absent.

In some cases, specific mixtures of internal donors, in particular of aliphatic or aromatic mono or dicarboxylic acid esters and 1,3-diethers as disclosed in WO07/57160 and WO2011/061134 can be used as internal donor.

Preferred magnesium halide support is magnesium dihalide.

In one embodiment, the amount of internal donor which remains fixed on the solid catalyst component (1) is 5 to 20% by moles, with respect to the magnesium dihalide.

Preferred methods for the preparation of the solid catalyst components start from Mg dihalide precursors that upon reaction with titanium chlorides converts the precursor into the Mg dihalide support. The reaction is preferably carried out in the presence of the stereoregulating internal donor.

In a preferred embodiment the magnesium dihalide precursor is a Lewis adduct of formula $MgCl_2$•nR1OH, where n is a number between 0.1 and 6, and R1 is a hydrocarbon radical having 1-18 carbon atoms. Preferably, n ranges from 1 to 5 and more preferably from 1.5 to 4.5.

The adduct can be suitably prepared by mixing alcohol and magnesium chloride, operating under stirring conditions at the melting temperature of the adduct (100-130°C).

Then, the adduct is mixed with an inert hydrocarbon immiscible with the adduct thereby creating an emulsion which is quickly quenched causing the solidification of the adduct in the form of spherical particles.

The so obtained adduct can be directly reacted with the Ti compound or it can be previously subjected to thermal controlled dealcoholation (80-130°C) so as to obtain an adduct in which the number of moles of alcohol is generally lower than 3 preferably between 0.1 and 2.5.

This controlled dealcoholation step may carried out in order to increase the morphological stability of the catalyst during polymerization and/or to increase the catalyst porosity as described in EP395083A2.

The reaction with the Ti compound can be carried out by suspending the optionally dealcoholated adduct in cold $TiCl_4$ (generally at 0°C). The mixture is heated up to 80-130°C and kept at this temperature for 0,5-2 hours. The treatment with $TiCl_4$ can be carried out one or more times. The stereoregulating internal donor can be added during the treatment with $TiCl_4$. The treatment with the internal donor can be repeated one or more times.

The preparation of catalyst components according to this general method is described for example in European Patent Applications US4,399,054, US4,469,648, WO98/44009A1 and as already mentioned, in EP395083A2.

In one embodiment, the catalyst component (1) is in the form of spherical particles having an average diameter ranging from 10 to 350 μm, a surface area ranging from 20 to 250 $m^2/g$, preferably from 80 to 200 $m^2/g$ and porosity greater that 0.2 ml/g, preferably of from 0.25 to 0.5 ml/g, wherein the surface area and the porosity are measured by BET.

In some preferred embodiments, the catalyst system comprises an Al-containing cocatalyst (2) selected from Al-trialkyls, preferably selected from the group consisting of Al-triethyl, Al-triisobutyl and Al-tri-n-butyl.

In one embodiment, the Al/Ti weight ratio in the catalyst system is from 1 to 1000, preferably from 20 to 800.

In a preferred embodiment, the catalyst system comprises a further electron donor compound (3) (external electron donor) selected among silicon compounds, ethers, esters, amines, heterocyclic compounds, particularly 2,2,6,6-tetramethylpiperidine, and ketones.

Preferably, the external donor is selected among silicon compounds of formula (R2)a(R3)bSi(OR4)c, where a and b are integers from 0 to 2, c is an integer from 1 to 4 and the sum (a+b+c) is 4; R2, R3, and R4, are alkyl, cycloalkyl or aryl radicals with 1-18 carbon atoms, optionally containing heteroatoms. Particularly preferred are the silicon compounds in which a is 1, b is 1, c is 2, at least one of R2 and R3 is selected from branched alkyl, cycloalkyl or aryl groups with 3-10 carbon atoms, optionally containing heteroatoms, and R4 is a C1-C10 alkyl group, in particular methyl.

Examples of such preferred silicon compounds are selected among methylcyclohexyldimethoxysilane (C-donor), diphenyldimethoxysilane, methyl-t-butyldimethoxysilane, dicyclopentyldimethoxysilane (D-donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane and combinations thereof.

The silicon compounds in which a is 0, c is 3, R3 is a branched alkyl or cycloalkyl group, optionally containing heteroatoms, and R4 is methyl are also preferred. Examples of such silicon compounds are cyclohexyltrimethoxysilane, t-butyltrimethoxysilane and hexyltrimethoxysilane.

Even if several combinations of the components of the catalyst system allow to obtain the polyolefin compositions of the present disclosure, a particularly preferred catalyst system comprises di-isobutyl phthalate as internal donor and dicyclopentyl dimethoxy silane (D-donor) as external electron donor (3).

In one embodiment, the catalyst system is pre-contacted with small quantities of olefin (prepolymerization), maintaining the catalyst in suspension in a hydrocarbon solvent, and polymerizing at temperatures from 25° to 60°C producing a quantity of polymer from about 0.5 to about 3 times the weight of the catalyst system.

In an alternative embodiment, the prepolymerization is carried out in liquid monomer, producing a quantity of polymer 1000 times the weight of the catalyst system.

Sequential polymerization processes for preparing the polyolefin compositions of the present disclosure are described in EP472946 and WO03/011962.

The components (A) and (B) can be produced in any one of the polymerization stages.

In one embodiment, the polymerization process comprises polymerizations stages carried out in the presence of a highly stereospecific Ziegler-Natta catalyst system, wherein:

(a) in the first copolymerization stage monomers are polymerized to form the propylene polymer (A); and
(b) in at least one second copolymerization stage the relevant monomers are polymerized to form the propylene copolymer (B).

In one embodiment, the second copolymerization stage (b) comprises a copolymerization stage (b1) and a copolymerization stage (b2), wherein the comonomers are polymerized to form the propylene copolymer (B1) and (B2), in any order.
The polymerization, which can be continuous or batch, can be carried out according to known cascade techniques operating either in mixed liquid phase/gas phase or totally in gas phase.
The liquid-phase polymerization can be either in slurry, solution or bulk (liquid monomer). This latter technology is the most preferred and can be carried out in various types of reactors such as continuous stirred tank reactors, loop reactors or plug-flow reactors.
The gas-phase polymerization stages can be carried out in gas-phase reactors, such as fluidized or stirred, fixed bed reactors.
In one embodiment, the copolymerization stage (a) is carried out in liquid phase using liquid propylene as diluent and the copolymerization stage (b), or the copolymerization stages (b1) and (b2), are carried out in the gas phase.
In a preferred embodiment, also the copolymerization stage (a) is carried out in the gas phase.
In one embodiment, the reaction temperatures of the polymerization stages (a), (b), (b1) and (b2) are independently selected from values comprised in the range from 40° to 90°C.
In one embodiment, the polymerization pressure of the copolymerization stage (a) carried out in liquid phase is from 3.3 to 4.3 MPa.
In one embodiment, the polymerization pressure of the copolymerization stages (a), (b), (b1) and (b2) carried out in gas-phase is independently selected from values comprised in the range from 0.5 to 3.0 MPa.
The residence time of each polymerization stage depends upon the desired ratio of component (A) and (B), or of component (A), (B1) and (B2), of the polyolefin composition.
In one embodiment, the residence time in each polymerization stage ranges from 15 minutes to 8 hours.
When the polyolefin composition of the present disclosure is prepared by a sequential polymerization process, the amounts of components (A) and (B), or of components (A), (B1) and (B2), correspond to the split between the polymerization reactors.
The molecular weight of the propylene copolymers obtained in the polymerization stages is regulated using chain transfer agents, such as hydrogen or $ZnEt_2$
The propylene-ethylene copolymer (II) preferably comprises 12-25% by weight, more preferably 15-20% by weight, of units deriving from ethylene, based on the weight of the propylene-ethylene copolymer (II).
The propylene-ethylene copolymer (II) is preferably a polyolefin elastomer (POE) having at least one of the following properties:

- a fraction soluble in xylene at 25°C greater than 97% by weight, preferably equal to or greater than 99% by weight, based on the weight of component (II); and/or
- an intrinsic viscosity XSIV(II) of the fraction soluble in xylene at 25°C lower than 2.00 dl/g, preferably ranging from 1.00 to 2.00 dl/g, more preferably from 1.10 to 1.80 dl/g; and/or
- molecular weight distribution Mw/Mn from 1.5 to 3.5, preferably from 1.8 to 3.0, more preferably from 2.0 to 2.8; and/or
- density from 0.840 to 0.880 g/cm$^3$, preferably from 0.850 to 0.870 g/cm$^3$, more preferably from 0.855 to 0.865 g/cm$^3$; and/or
- Shore A value lower than 90, preferably lower than 50, measured on compression molded plaques according to the method ISO 868.

In a preferred embodiment, the propylene-ethylene copolymer (II) is a POE having all the properties indicated above.
The propylene-ethylene copolymer (II) can be prepared using known processes and apparatuses, eg. using homogeneous conditions, preferably a solution polymerization process, preferably in the presence of a metallocene catalyst system.
The polyolefin elastomers suitable as propylene-ethylene copolymer (II) are also commercially available, for example under the trademarks Vistamaxx® marketed by ExxonMobil or Notio® marketed by Mitsui chemicals.
Preferably the polyolefin composition of the present disclosure comprises 65-95% by weight, more preferably 75-93% by weight of the heterophasic polyolefin composition (I) and 5-35% by weight, more preferably 7-25% by weight of

the propylene-ethylene copolymer (II), wherein the amounts of components (I) and (II) are based on the weight (I)+(II).

In one embodiment, the polyolefin composition comprises:

(I) 50-95% by weight, preferably 65-95% by weight, more preferably 75-93% by weight, of an heterophasic polyolefin composition comprising:

(A) 10-40% by weight, 15-35% by weight, preferably 20-30% by weight of a copolymer of propylene with hexene-1 comprising 1.0-6.0% by weight, based on the weight of (A), preferably 2.0-5.0% by weight, preferably 2.8-4.8% by weight, more preferably 3.0-4.0% by weight, of hexene-1 and having melt flow rate ($MFR_A$) measured according to ISO 1133, 230°C, 2.16 kg ranging from 20 to 60 g/10 min., preferably from 25 to 55 g/10 min., more preferably from 25 to 50 g/10 min.; and
(B) 60-90% by weight, 65-85% by weight, preferably 70-80% by weight, of a copolymer of propylene with ethylene comprising 20-35% by weight of ethylene, preferably 25-35% by weight, based on the total weight of (B),

wherein

i) the fraction of the heterophasic polyolefin composition (I) soluble in xylene at 25°C XS(I) is higher than 60% by weight, preferably higher than 65% by weight, more preferably higher than 70% by weight, more preferably XS(I) ranges from 71 to 90% by weight, preferably from 72 to 80% by weight and wherein the amounts of (A) and (B) and XS(I) are based on the total weight of (A)+(B); and
ii) the melt flow rate (MFR(I)) of the heterophasic polyolefin composition (I) measured according to ISO 1133, 230°C, 2.16 kg ranges from 0.2 to 6.0 g/10 min., preferably from 0.2 to 2.0 g/10 min., preferably from 0.2 to 1.5 g/10 min., preferably from 0.25 to 1.00 g/10 min, and

(II) 5-50 % by weight, preferably 5-35% by weight, more preferably 7-25% by weight, of a propylene-ethylene copolymer comprising 12-25% by weight, preferably 15-20% by weight, of units deriving from ethylene, based on the weight of the propylene-ethylene copolymer, wherein the propylene-ethylene copolymer has:

iii) a fraction soluble in xylene at 25°C greater than 97% by weight, preferably equal to or greater than 99% by weight, based on the weight of component (II); and/or
iv) the fraction soluble in xylene at 25°C has intrinsic viscosity XSIV(II) lower than 2.00 dl/g, preferably from 1.00 to 2.00 dl/g, more preferably from 1.10 to 1.80 dl/g; and/or
v) molecular weight distribution Mw/Mn from 1.5 to 3.5, preferably from 1.8 to 3.0, more preferably from 2.0 to 2.8; and/or
vi) density from 0.840 to 0.880 g/cm$^3$, preferably from 0.850 to 0.870 g/cm$^3$, more preferably from 0.855 to 0.865 g/cm$^3$; and/or
vii) Shore A value lower than 90, preferably lower than 50, measured on compression molded plaques according to the method ISO 868,

wherein the amounts of (I) and (II) are based on the total weight of (I)+(II).

The polyolefin composition is preferably endowed with at least one of the following properties:

- melt flow rate MFR(tot) measured according to ISO 1133, 230°C, 2.16 kg ranging from 0.2 to 2.0 g/10 min.; and/or
- the total xylene soluble fraction has intrinsic viscosity XSIV(tot) at 25°C ranging from 2.0 to 4.0 dl/g.

More preferably the polyolefin composition has MFR(tot) and XSIV(tot) values comprised in the ranges above.

Preferably, the polyolefin composition is also endowed with at least one of the following properties, measured on 1mm-thick extruded sheets:

- tear resistance in MD and/or TD, preferably in MD and TD, determined according to the method ASTM D 1004 (Crosshead speed: 51 mm/min; V-shaped die cut specimen), equal to or greater than 50 N, preferably comprised in the range 50-70 N; and/or
- tensile strength at break equal to or greater than 15.0 MPa in MD and/or TD, preferably in MD and TD, determined according to the method ISO527-3 (Specimens type: 5, Crosshead speed: 500 mm/min). More preferably, the strength at break in MD and/or TD, preferably in MD and TD, is comprised in the range 15.0-18.0 MPa; and/or
- Shore A (15 sec) lower than or equal to 85, preferably 70-85, measured according to method ISO 868 (15 sec); and/or
- Shore D (15 sec) lower than or equal to 30, preferably 23-30, measured according to method ISO 868 (15 sec); and/or

- puncture resistance equal to or greater than 200 N, preferably 200-250 N, measured according to method ASTM D 4833 (punch diameter: 8 mm, crosshead speed: 300 mm/min); and/or
- puncture deformation equal to or greater than 50 mm, preferably 50-60 mm, measured according to method ASTM D 4833 (punch diameter: 8 mm, crosshead speed: 300 mm/min).

In a preferred embodiment the polyolefin composition is endowed with all the properties above measured on 1mm-thick extruded sheet.

In some preferred embodiments of the present disclosure, the polyolefin composition is an additivated polyolefin composition (AC) comprising a total amount of up to 0.5 % by weight, based on the total weight of the additivated polyolefin composition (AC), preferably from 0.01 to 0.5% by weight, more preferably from 0.01 to 0.3% by weight, of the at least one first additive (III) selected from the group consisting of antistatic agents, anti-oxidants, anti-acids, melt stabilizers, nucleating agents and combinations thereof, of the type used in the polyolefin field.

In some embodiments, the polyolefin composition, optionally comprising the first additive (III), is compounded with at least one second additive (IV).

In one embodiment, the compounded polyolefin composition (CC) comprises:

(a) at least 50% by weight, preferably 50-99.5% by weight, preferably 60-99% by weight, more preferably 30-99% by weight, of the polyolefin composition or of the additivated polyolefin composition (AC); and

(b) up to 50% by weight, preferably 0.05-50% by weight, preferably 1-40% by weight, more preferably 1-30% by weight, of the at least one second additive (IV) selected from the group consisting of fillers, pigments, dyes, extension oils, flame retardants (e. g. aluminum trihydrate), UV resistants (e. g. titanium dioxide), UV stabilizers, lubricants (e. g., oleamide), antiblocking agents, slip agents, waxes, coupling agents for fillers, and combinations thereof, the second additive (IV) being known in the polymer compounding art,

wherein the amounts of (a) and (b) are based the total weight of (a)+(b).

In one embodiment, the compounded polyolefin composition consists of component (a) and (b).

The polyolefin composition can be obtained by mechanically blending component (I) and component (II), and optionally the additives, preferably in the molten state using a conventional extruder, such as a twin-screw extruder.

The addition of the propylene-ethylene copolymer (II) to the heterophasic polyolefin composition (I) increases the softness of the heterophasic, without adversely affecting the good balance of physical mechanical properties of the composition.

Thus, in a further aspect, the present disclosure refers to a method for improving softness of an heterophasic polyolefin composition (I) comprising a propylene polymer (A) and a copolymer of propylene (B), the method comprising adding, preferably melt blending, to the heterophasic polyolefin composition (I) 5-50 % by weight, preferably 5-35% by weight, more preferably 7-25% by weight, of a propylene-ethylene copolymer (II) comprising 12-25% by weight of units deriving from ethylene, preferably 15-20% by weight, based on the weight of the propylene-ethylene copolymer.

Preferably, the heterophasic polyolefin composition (I) and/or the propylene-ethylene copolymer (II), preferably both, are as described above.

The physical-mechanical properties of the polyolefin composition of the present disclosure renders it suitable for producing sheets or membranes.

A further object of the present disclosure is therefore a sheet or membrane comprising the polyolefin composition or the additivated polyolefin composition (AC) or the compounded polyolefin composition (CC).

In some embodiments, the sheet or membrane has total thickness in the range from 1000 to 2000 $\mu$m, preferably from 1200 to 1800 $\mu$m.

The sheet or membrane is a monolayer or a multilayer sheet or membrane.

In one embodiment, the sheet or membrane is a monolayer sheet or membrane comprising the polyolefin composition or the additivated polyolefin composition (AC) or the compounded polyolefin composition (CC).

In some embodiments, the sheet or membrane is a multilayer sheet or membrane comprising at least one layer X, wherein the layer X comprises the polyolefin composition or the additivated polyolefin composition (AC) or the compounded polyolefin composition (CC). In one embodiment, the layer X consists of polyolefin composition or the additivated polyolefin composition (AC) or the compounded polyolefin composition (CC).

In one embodiment, the multilayer sheet or membrane comprises a layer X and a layer Y, wherein the layer X and the layer Y comprise the polyolefin composition or the additivated polyolefin composition (AC) or the compounded polyolefin composition (CC). In one embodiment, the layer X and/or the layer Y consist of polyolefin composition or the additivated polyolefin composition (AC) or the compounded polyolefin composition (CC). In one embodiment, both the layer X and the layer Y consists of polyolefin composition or the additivated polyolefin composition (AC) or the compounded polyolefin composition (CC).

In one embodiment, the multilayer sheet or membrane comprises at least three layers X, Y and Z and has layers

structure X/Z/Y, wherein the layer X and the layer Y comprise the polyolefin composition or the additivated polyolefin composition (AC) or the compounded polyolefin composition (CC), and the layer Z is a reinforcing layer comprising a plastic material selected from the group consisting of propylene homopolymers, propylene copolymers, polyethylene, polyethylene terephthalate and combinations thereof. In one embodiment, the layer X and the layer Y consists of the polyolefin composition or the additivated polyolefin composition (AC) or the compounded polyolefin composition (CC).

In one embodiment, the layer Z is a woven fabric or a non-woven fabric.

Monolayer sheets or membranes are obtainable by calendaring, extrusion or spread coating. In one preferred embodiment, the sheet or membrane is obtained by extrusion.

Multilayers sheets or membranes are obtainable by co-extrusion of the polyolefin comprised in the layers or by lamination of the layers.

In one embodiment, the sheet or membrane is a single-ply roofing sheet or membrane.

In one embodiment, the sheet or membrane is a geomembrane.

The features describing the subject matter of the present disclosure are not inextricably linked to each other. As a consequence, a certain level of preference of one feature does not necessarily involve the same level of preference of the remaining features of the same or different components. It is intended in the present disclosure that any preferred range of features of components (I) to (IV) can be combined with any preferred range of one or more of the features of components (I) to (Iv) and with any possible additional component, and its features, described in the present disclosure.

## EXAMPLES

The following examples are illustrative only, and are not intended to limit the scope of the disclosure in any manner whatsoever.

### CHARACTERIZATION METHODS

The following methods are used to determine the properties indicated in the description, claims and examples.

**Melt Flow Rate:** Determined according to the method ISO 1133 (230°C, 2.16kg).

**Solubility in xylene at 25°C:** 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. XS(I) and $XS_A$ values are experimentally determined. The fraction of component (B) soluble in xylene at 25°C ($XS_B$) can be calculated from the formula:

$$XS = W(A) \times (XS_A) + W(B) \times (XS_B)$$

wherein W(A) and W(B) are the relative amounts of components (A) and (B), respectively, and W(A)+ W(B)=1.

**Intrinsic viscosity of the xylene soluble fraction:** to calculate the value of the intrinsic viscosity IV, the flow time of a polymer solution is compared with the flow time of the solvent (THN). A glass capillary viscometer of Ubbelohde type is used. The oven temperature is adjusted to 135°C. Before starting the measurement of the solvent flow time *t0* the temperature must be stable (135° ± 0.2°C). Sample meniscus detection for the viscometer is performed by a photoelectric device. Sample preparation: 100 ml of the filtered solution (S1) is poured in a beaker and 200 ml of acetone are added under vigorous stirring. Precipitation of insoluble fraction must be complete as evidenced by a clear solid-solution separation. The suspension is filtered on a weighed metallic screen (200 mesh), the beaker is rinsed and the precipitate is washed with acetone so that the o-xylene is completely removed. The precipitate is dried in a vacuum oven at 70°C until a constant weight is reached. 0.05g of precipitate are weighted and dissolved in 50ml of tetrahydronaphthalene (THN) at a temperature of 135°C. The efflux time t of the sample solution is measured and converted into a value of intrinsic viscosity [$\eta$] using Huggins' equation (Huggins, M.L., J. Am. Chem. Soc. 1942, 64, 11, 2716-2718) and the following data:

- concentration (g/dl) of the sample;
- the density of the solvent at a temperature of 135°C;
- the flow time t0 of the solvent at a temperature of 135°C on the same viscometer.

One single polymer solution is used to determine [η].

**Comonomer content of the heterophasic polyolefin composition (I):** determined by IR using Fourier Transform Infrared Spectrometer (FTIR). The spectrum of a pressed film of the polymer is recorded in absorbance vs. wavenumbers ($cm^{-1}$). The following measurements are used to calculate ethylene and hexene-1 content:

- Area (At) of the combination absorption bands between 4482 and 3950 $cm^{-1}$ which is used for spectrometric normalization of film thickness;
- a linear baseline is subtracted in the range 790 - 660 $cm^{-1}$ and the remaining constant offset is eliminated;
- the content of ethylene and hexene-1 are obtained by applying a Partial Least Square (PLS1) multivariate regression to the 762 - 688 $cm^{-1}$ range.

The method is calibrated by using polymer standards based on $^{13}C$ NMR analyses. Sample preparation: Using a hydraulic press, a thick sheet is obtained by pressing about 1g of sample between two aluminum foils. Pressing temperature is 180 ±10°C (356°F) and about 10 $kg/cm^2$ pressure for about one minute (minimum two pressing operations for each specimen). A small portion is cut from this sheet to mold a film. Recommended film thickness ranges between 0.02-0.05 cm.

**C2 content in propylene-ethylene copolymer (II):** $^{13}C$ NMR spectra were acquired on a Bruker AV-600 spectrometer equipped with cryoprobe, operating at 160.91 MHz in the Fourier transform mode at 120°C. The peak of the $P_{\beta\beta}$ carbon (nomenclature according to C. J. Carman, R. A. Harrington and C. E. Wilkes, Macromolecules, 10, 3, 536 (1977)) was used as internal reference at 2.8 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove $^{1}H$-$^{13}C$ coupling. 512 transients were stored in 32K data points using a spectral window of 9000 Hz. The assignments of the spectra, the evaluation of triad distribution and the composition were made according to Kakugo [M. Kakugo, Y. Naito, K. Mizunuma and T. Miyatake, Macromolecules, 15, 4, 1150-1152 (1982)]. Owing to the low amount of Propylene inserted as regioirregular units, ethylene content was calculated according to Kakugo [M. Kakugo, Y. Naito, K. Mizunuma and T. Miyatake, Macromolecules, 15, 4, 1150-1152 (1982)] using only triad sequences with P inserted as regular unit.

$$PPP = 100\ T_{\beta\beta}/S$$

$$PPE = 100\ T_{\beta\delta}/S$$

$$EPE = 100\ T_{\delta\delta}/S$$

$$PEP = 100\ S_{\beta\beta}/S$$

$$PEE= 100\ S_{\beta\delta}/S$$

$$EEE = 100\ (0.25\ S_{\gamma\delta}+0.5\ S_{\delta\delta})/S$$

Where

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

Density: Determined according to the ISO 1183-1:2019.

**Molecular weight distribution Mw/Mn of propylene-ethylene copolymer (II):** Molecular weights and molecular weight distribution were measured at 150°C using a Waters Alliance GPCV/2000 instrument equipped with four mixed-bed columns PLgel Olexis having a particle size of 13 μm. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-ditert-butyl-p-cresol were added. 300 μl (nominal value) of solution were injected into the column set. A calibration curve was obtained using 10 polystyrene standard samples (EasiCal kit by Agilent) with molecular weights in the range from 580 to 7500000. It was assumed that the K values of the Mark-Houwink

relationship were:

$$K = 1.21 \times 10^{-4} \text{ dl/g and}$$

$\alpha$ = 0.706 for the polystyrene standards,

A third order polynomial fit was used for interpolate the experimental data and obtain the calibration curve. Data acquisition and processing was done by using Waters Empowers 3 Chromatography Data Software with GPC option. For ethylene/propylene copolymers, as far as the data evaluation is concerned, it was assumed for each sample that the composition was constant in the whole range of molecular weight and the K value of the Mark-Houwink relationship was calculated using a linear combination as reported below:

$$K_{PE} = X_P K_{PP} + X_E K_{PE}$$

where $K_{PE}$ is the constant of the copolymers, $K_{PP}$ (1.90 $\times$ $10^{-4}$ dl/g) and $K_{PE}$ (4.06 $\times$ $10^{-4}$ dl/g) are the constants of polypropylene (PP) and polyethylene (PE), XP and XE are the propylene and ethylene weight relative amount with $X_P + X_E$ = 1. The Mark-Houwink exponents $\alpha$ = 0.725 was used for all samples independently on their composition.

**Preparation of injection molded specimens:** test specimens 80 x 10 x 4 mm were obtained according to the method ISO 1873-2:2007.

**Preparation of extruded specimens:** the polymer in form of granules are fed via feed hoppers into a Leonard extruder (mono-screw extruder, 40 mm in diameter and 27 L/D in length) where the polymer was first melted (melt temperature 230°C), compressed, mixed and finally metered out at a throughput rate of 10 Kg/h with a metering pump (15 cc/rpm). The molten polymer leaves the flat die (width 200 mm, die lip at 0.8-0.9 mm) and is instantly cooled through a vertical three-rolls calendrer having roll-temperature of 60°C. 1mm-thick extruded sheets are obtained.

**Preparation of compression molded plaques:** obtained according to ISO 8986-2:2009.

**Flexural modulus:** Determined according to the method ISO 178:2019 on injection molded test specimens.

**Strength and Elongation at break:** Determined according to the method ISO 527 on injection molded test specimens.

**Vicat softening temperature:** Determined according to the method ISO 306:2013 (A50) on injection molded specimens.

**Charpy Impact test at -40°C:** measured according to ISO 179-1:2010 on injection molded specimens.

**Tensile Modulus (MD and TD):** Determined according to the method ISO 527-3:2018 on 1mm-thick extruded sheets. Specimens type 2, Crosshead speed: 1 mm/min.

**Tensile strength and elongation at break (MD and TD) on extruded sheets:** Determined according to the method ISO527-3. Specimens type: 5, Crosshead speed: 500 mm/min.

**Tear resistance:** Determined according to the method ASTM D 1004 on 1mm-thick extruded sheets. Crosshead speed: 51 mm/min; V-shaped die cut specimen.

**Puncture resistance and deformation:** Determined according to the method ASTM D 4833 on 1mm-thick extruded sheets. Punch diameter 8 mm, crosshead speed: 300 mm/min.

**Shore A and D on injection molded, compression molded plaques and extruded sheets:** Determined according to the method ISO 868 (15 sec).

**HECO1 and HECO2:** The heterophasic polyolefin composition HECO1 and HECO2 are prepared by polymerization in two gas phase reactors connected in series and equipped with devices to transfer the product from the first to the second reactor. For the polymerization a Ziegler-Natta catalyst system is used comprising:

- a titanium-containing solid catalyst component prepared with the procedure described in EP395083, Example 3, according to which di-isobutyl phthalate is used as internal electron donor compound;
- triethylaluminium (TEAL) as co-catalyst;
- Dicyclopentyl dimethoxy silane (DCPMS) as external electron donor.

The solid catalyst component is contacted with TEAL and DCPMS in a pre-contacting vessel, with a weight ratio of TEAL to the solid catalyst component of 4-5. The weight ratio TEAL/DCPMS (T/D) is reported in Table 1.

The catalyst system is then subjected to pre-polymerization by maintaining it in suspension in liquid propylene at 20°C for about 30-32 minutes before introducing it into the first polymerization reactor.

Propylene copolymer (A) is produced into the first gas phase reactor by feeding in a continuous and constant flow the pre-polymerized catalyst system, hydrogen (used as molecular weight regulator) and propylene and comonomer

(hexene-1 or ethylene) all in gaseous phase.

The propylene copolymer (A) coming from the first reactor is discharged in a continuous flow and, after having been purged of unreacted monomers, is introduced, in a continuous flow, into the second gas phase reactor, together with quantitatively constant flows of propylene, ethylene and hydrogen, all in the gas state. In the second reactor the propylene copolymer (B) is produced.

Polymerization conditions, molar ratio of the reactants and composition of the copolymers obtained are shown in Table 1.

Table 1 - polymerization conditions

| | | **HECO1** | **HECO2** |
|---|---|---|---|
| **GPR1** | | | |
| T/D | | 10 | 5 |
| Temperature | °C | 60 | 70 |
| Pressure | barg | 16 | 18 |
| $H_2/C_3$- | mol. | 0.066 | 0.10 |
| $C_6$-/($C_6$- + $C_3$-) | mol | 0.034 | / |
| $C_2$-/($C_2$- + $C_3$-) | mol | / | 0.01 |
| **Split** | **wt%** | **21** | **31** |
| Xylene soluble of A ($XS_A$) | wt% | 6.2 | 5.5 |
| MFR of A ($MFR_A$) | g/10 min. | 30.3 | 25 |
| $C_6$- content of A | wt% | 3.8 | / |
| $C_2$- content of A | wt% | / | 3.2 |
| **GPR2** | | | |
| Temperature | °C | 55 | 60 |
| Pressure | barg | 16 | 18 |
| $H_2/C_2$- | mol. | 0.065 | 0.09 |
| $C_2$-/($C_2$- + $C_3$-) | mol. | 0.146 | 0.16 |
| **Split** | **wt%** | **79** | **69** |
| $C_2$- content of B * | wt% | 28 | 27 |
| $C_2$- content of (A+ B) | wt% | 21.7 | 19.4 |
| MFR(I) | g/10 min | 0.33 | 0.61 |
| XSIV(I) | dl/g | 3.79 | 3.18 |
| XS(I) | % | 72.9 | 63.6 |
| Notes: C2- = ethylene in gas phase (IR); C3- = propylene in gas phase (IR); C6- = hexene-1 in gas phase (IR); split = amount of polymer produced in the concerned reactor. * Calculated values. | | | |

The polymer particles exiting the second reactor are subjected to a steam treatment to remove the unreacted monomers and volatile compounds, and then dried.

Properties of HECO1 and HECO2 tested on injection molded specimens are reported in Table 2.

Table 2 - characterization of HECO1 and HECO2

| | | **HECO1** | **HECO2** |
|---|---|---|---|
| Flexural Modulus | MPa | 70 | 99 |
| Strength at break | MPa | 10.2 | 10.5 |
| Elongation at break | % | 390 | 400 |

(continued)

| | | HECO1 | HECO2 |
|---|---|---|---|
| Vicat temperature (9.81 N) | °C | 55 | 62 |
| Charpy Resistance -40°C | KJ/$m^2$ | 7 | 5.2 |

**Comparative example CE1 and examples E2-E3**

In a co-rotating twin screw extruder Berstorff ZE25 HECO1 as obtained from the reactor is melt blended with a propylene-ethylene elastomer (POE) and additives. The blend is extruded under nitrogen atmosphere in the following conditions: Rotation speed of 250 rpm; Extruder output of 15 kg/hour; Melt temperature of 270 °C.

The POE comprises 19% of units deriving from ethylene and has the following characteristics: XSIV(II) of 1.68 dl/g; Mw/Mn of 2.3; density of 0.8575 g/$cm^3$; MFR(II) (230°/2.16 Kg) of 2.4 g/10 min.; Shore A value (15 sec) of 43 measured in compression molded specimens.

The relative amounts of components (I) and (II) and of the additives, as well as the properties of the compositions measured on extruded sheets are reported in table 3.

Table 3

| | | CE1 | E2 | E3 |
|---|---|---|---|---|
| | | | | |
| HECO1 | wt.% | 99.8 | 89.8 | 79.8 |
| POE | wt.% | - | 10 | 20 |
| Irg. 1010 | wt.% | 0.05 | 0.05 | 0.05 |
| Irg. 168 | wt.% | 0.1 | 0.1 | 0.1 |
| Ca stearate | wt.% | 0.05 | 0.05 | 0.05 |
| | | | | |
| MFR(tot) | g/10 min | --- | 0.78 | 0.69 |
| XSIV(tot) | dl/g | --- | 2.77 | 2.80 |
| XS(tot) | % | --- | 73.2 | 77.3 |
| | | | | |
| MD | | | | |
| Tensile modulus | MPa | 82 | 83 | 67 |
| Tensile strength at break | MPa | 16.5 | 16.3 | 16.3 |
| Elongation at break | % | 630 | 670 | 680 |
| Tear resistance | N | 64 | 67 | 66 |
| TD | | | | |
| Tensile modulus | MPa | 48 | 43 | 29 |
| Tensile strength at break | MPa | 15.5 | 18.6 | 16.3 |
| Elongation at break | % | 656 | 700 | 680 |
| Tear resistance | N | 59 | 58 | 82 |
| | | | | |
| Shore A (15 sec) | | 89 | 84 | 82 |
| Shore D (15 sec) | | 31 | 27 | 25 |
| | | | | |
| Puncture resistance | N | 210 | 234 | 213 |

(continued)

| | | CE1 | E2 | E3 |
|---|---|---|---|---|
| Puncture deformation | mm | 45 | 52 | 53 |

Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos® 168 is tris(2,4-di-tert.-butylphenyl)phosphite.

**Comparative examples CE4-CE6**

HECO1 as obtained from the reactor is melt blended with Vistamaxx® 3020 (ExxonMobil), a commercial POE containing 11 wt.% of C2, having MFR (230°/2.16 Kg) of 3 g/10 min., density of 0.874 g/$cm^3$ and a Shore D value of 29. The polyolefin compositions, including the additives, are extruded in the same conditions of comparative example CE1.

The formulations of the polyolefin compositions are reported in table 4. The properties of the compositions measured on extruded sheets are reported in table 5.

Table 4

| | | CE4 | CE5 | CE6 |
|---|---|---|---|---|
| | | | | |
| HECO1 | wt.% | 99.75 | 89.75 | 79.75 |
| Vistamaxx® 3020 | wt.% | - | 10 | 20 |
| Irg. 1010 | wt.% | 0.1 | 0.1 | 0.1 |
| Irg. 168 | wt.% | 0.1 | 0.1 | 0.1 |
| Ca stearate | wt.% | 0.05 | 0.05 | 0.05 |
| | | | | |
| MFR(tot) | g/10 min | --- | 0.46 | 0.57 |
| XSIV(tot) | dl/g | --- | 3.23 | 2.81 |
| XS(tot) | % | --- | 74.1 | 76.1 |

Table 5

| | | CE4 | CE5 | CE6 |
|---|---|---|---|---|
| MD | | | | |
| Tensile modulus | MPa | 80 | 79 | 69 |
| Tensile strength at break | MPa | 17.7 | 21.6 | 20.0 |
| Elongation at break | % | 650 | 700 | 670 |
| Tear resistance | N | 74 | 76 | 73 |
| TD | | | | |
| Tensile modulus | MPa | 60 | 52 | 58 |
| Tensile strength at break | MPa | 16.9 | 21.1 | 23.8 |
| Elongation at break | % | 690 | 740 | 730 |
| Tear resistance | N | 72 | 83 | 70 |
| | | | | |
| Shore A (15 sec) | | 89 | 90 | 90 |
| Shore D (15 sec) | | 30 | 31 | 31 |
| | | | | |
| Puncture resistance | N | 244 | 247 | 250 |

(continued)

| | | CE4 | CE5 | CE6 |
|---|---|---|---|---|
| Puncture deformation | Mm | 50 | 49 | 50 |

Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos® 168 is tris(2,4-di-tert.-butylphenyl)phosphite.

**Comparative examples CE7 and CE10 and examples E8-E9**

HECO2 as obtained from the reactor is melt blended with the POE used in example E2 or with a C2/C8 elastomer (Engage™ 8150, marketed by Dow® Inc.) having melt index (190°/2.16 Kg) of 0.5 g/10 min. (ASTM D1238), density of 0.868 g/cm$^3$ (ASTM D792) and a Shore D value of 20 (1 sec, on compression molded plaques, ADTM D2240). The polyolefin compositions including the additives are extruded in the same conditions of comparative example CE1. The formulations of the polyolefin compositions are reported in table 6. Table 7 reports the properties of the compositions measured on extruded sheets.

Table 6

| | | CE7 | E8 | E9 | CE10 |
|---|---|---|---|---|---|
| | | | | | |
| HECO2 | wt.% | 99.75 | 79.75 | 49.75 | 49.75 |
| POE | wt.% | - | 20 | 50 | - |
| C2/C8 elastomer | wt.% | - | - | - | 50 |
| Irg. 1010 | wt.% | 0.1 | 0.1 | 0.1 | 0.1 |
| Irg. 168 | wt.% | 0.1 | 0.1 | 0.1 | 0.1 |
| Ca stearate | wt.% | 0.05 | 0.05 | 0.05 | 0.05 |

Table 7

| | | CE7 | E8 | E9 | CE10 |
|---|---|---|---|---|---|
| MD | | | | | |
| Tensile strength at break | MPa | 19.5 | 22.2 | 16.2 | 23.6 |
| Elongation at break | % | 750 | 920 | 900 | 720 |
| Tear resistance | N | 71 | 68 | 47 | 61 |
| | | | | | |
| Shore A (15 sec) | | >90 | 84 | 71 | 82 |
| Shore D (15 sec) | | 34 | 28 | 17 | 27 |

Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos® 168 is tris(2,4-di-tert.-butylphenyl)phosphite.

## Claims

**1.** A polyolefin composition comprising:

(I) 50-95% by weight of an heterophasic polyolefin composition comprising:

(A) 10-40% by weight of a propylene polymer selected from propylene homopolymers or copolymers of propylene with at least one alpha-olefin of formula $CH_2$=CHR, where R is H or a linear or branched C2-C8 alkyl, the copolymer comprising 1.0-6.0% by weight, based on the weight of (A), of units deriving from the

alpha-olefin and having melt flow rate ($MFR_A$) measured according to ISO 1133, 230°C, 2.16 kg ranging from 20 to 60 g/10 min.; and

(B) 60-90% by weight of a copolymer of propylene with at least one alpha-olefin of formula $CH_2$=CHR, and optionally a diene, where R is H or a linear or branched C2-C8 alkyl and wherein the copolymer comprises 20-35% by weight, based on the weight of (B), of units deriving from the alpha-olefin, wherein the fraction of the copolymer (B) soluble in xylene at 25°C ($XS_B$) is higher than 80% by weight and lower than 97% by weight, based on the weight of the copolymer (B),

wherein the fraction of the heterophasic polyolefin composition (I) soluble in xylene at 25°C (XS(I)) is equal to or higher than 60% by weight, the amounts of (A), (B) and XS(I) being based on the total weight of (A)+(B); and (II) 5-50 % by weight of a propylene-ethylene copolymer comprising 12-25% by weight of units deriving from ethylene, based on the weight of the propylene-ethylene copolymer, wherein the ethylene-propylene copolymer (II) has a fraction soluble in xylene at 25°C greater than 97% by weight based on the weight of the copolymer (II),

wherein the amounts of (I) and (II) are based on the total weight of (I)+(II) and the fraction soluble in xylene at 25°C is measured using the method as disclosed in the description.

**2.** The polyolefin composition of claim 1, wherein the propylene polymer (A) comprises 2.0-5.0% by weight, preferably 2.8-4.8% by weight, more preferably 3.0-4.0% by weight, based on the weight of the propylene polymer (A), of units deriving from the alpha-olefin.

**3.** The polyolefin composition of claim 1 or 2, wherein the propylene polymer (A) has melt flow rate ($MFR_A$) measured according to ISO 1133, 230°C, 2.16 kg ranging from 25 to 55 g/10 min., preferably from 25 to 50 g/10 min.

**4.** The polyolefin composition according to any one of claims 1-3, wherein the fraction of the heterophasic polyolefin composition (I) soluble in xylene at 25°C (XS(I)) is higher than 65% by weight, preferably higher that 70% by weight, preferably ranging from 71 to 90% by weight, more preferably from 72 to 80% by weight, based on the total weight of (A)+(B), wherein the fraction soluble in xylene at 25°C is measured using the method as disclosed in the description.

**5.** The polyolefin composition according to any one of claims 1-4, wherein the fraction of the heterophasic polyolefin composition (I) soluble in xylene at 25°C has intrinsic viscosity XSIV(I) ranging from 2.0 to 5.5 dl/g, preferably 2.5 to 4.5 dl/g, more preferably from 3.1 to 3.9 dl/g, wherein the intrinsic viscosity is measured using the method as disclosed in the description.

**6.** The polyolefin composition according to any one of claims 1-5, wherein the at least one alpha-olefin comprised in copolymer (B) is selected from the group consisting of ethylene, butene-1, hexene-1, 4-methy-pentene-1, octene-1 and combinations thereof, the alpha-olefin being preferably ethylene.

**7.** The polyolefin composition according to any one of claims 1-6, wherein the propylene-ethylene copolymer (II) is a polyolefin elastomer having at least one of the following properties:

- a fraction soluble in xylene at 25°C greater than 97% by weight, preferably equal to or greater than 99% by weight, based on the weight of component (II), wherein the fraction soluble in xylene at 25°C is measured using the method as disclosed in the description; and/or
- intrinsic viscosity XSIV(II) of the fraction soluble in xylene at 25°C lower than 2.00 dl/g, preferably from 1.00 to 2.00 dl/g, more preferably from 1.10 to 1.80 dl/g, wherein the intrinsic viscosity is measured using the method as disclosed in the description; and/or
- molecular weight distribution Mw/Mn from 1.5 to 3.5, preferably from 1.8 to 3.0, more preferably from 2.0 to 2.8; and/or
- density from 0.840 to 0.880 g/$cm^3$, preferably from 0.850 to 0.870 g/$cm^3$, more preferably from 0.855 to 0.865 g/$cm^3$; and/or
- Shore A value lower than 90, preferably lower than 50, measured on compression molded plaques according to the method ISO 868.

**8.** The polyolefin composition according to claim 1, comprising:

(I) 50-95% by weight of an heterophasic polyolefin composition comprising:

(A) 10-40% by weight of a copolymer of propylene with hexene-1 comprising 1.0-6.0% by weight, based on the weight of component (A), of units deriving from hexene-1 and having melt flow rate ($MFR_A$) measured according to ISO 1133, 230°C, 2.16 kg ranging from 20 to 60 g/10 min.; and
(B) 60-90% by weight of a copolymer of propylene with ethylene comprising 20-35% by weight of units deriving from ethylene, based on the total weight of component (B), wherein

i) the fraction of the heterophasic polyolefin composition soluble in xylene at 25°C (XS(I)) is higher than 65% by weight, wherein the fraction soluble in xylene at 25°C is measured using the method as disclosed in the description;
ii) the amounts of (A), (B) and XS(I) are based on the total weight of (A)+(B); and
iii) the melt flow rate (MFR(I)) measured according to ISO 1133, 230°C, 2.16 kg of the heterophasic polyolefin composition (I) ranges from 0.2 to 6.0 g/10 min.,;

and

(II) 5-50 % by weight of a propylene-ethylene copolymer comprising 12-25% by weight of units deriving from ethylene, based on the weight of the propylene-ethylene copolymer,
wherein the propylene-ethylene copolymer has:

iii) a fraction soluble in xylene at 25°C greater than 97% by weight based on the weight of component (II), wherein the fraction soluble in xylene at 25°C is measured using the method as disclosed in the description; and/or
iv) the intrinsic viscosity XSIV(II) of the fraction soluble in xylene at 25°C lower than 2.00 dl/g, wherein the intrinsic viscosity is measured using the method as disclosed in the description; and/or
v) molecular weight distribution Mw/Mn from 1.5 to 3.5; and/or
vi) density from 0.840 to 0.880 g/$cm^3$,; and/or
vii) Shore A value lower than 90 measured on compression molded plaques according to the method ISO 868,

and wherein the amounts of (I) and (II) are based on the total weight of (I)+(II).

**9.** The polyolefin composition according to any one of claims 1-8 comprising 65-95% by weight, preferably 75-93% by weight of component (I) and 5-35% by weigh, preferably 7-25% by weight of component (II).

**10.** The polyolefin composition according to any one of claims 1-9, wherein the heterophasic polyolefin composition (I) comprises 15-35% by weight, preferably 20-30% by weight of the propylene polymer (A) and 65-85% by weight, preferably 70-80% by weight of propylene copolymer (B).

**11.** Method for improving softness of an heterophasic polyolefin composition (I) as described in any one of claims 1-10 comprising adding, preferably melt blending, to the heterophasic polyolefin composition (I) 5-50 % by weight, of a propylene-ethylene copolymer (II) comprising 12-25% by weight of units deriving from ethylene based on the weight of the propylene-ethylene copolymer, the propylene-ethylene copolymer (II) having a fraction soluble in xylene at 25°C greater than 97% by weight based on the weight of the copolymer (II), wherein the fraction soluble in xylene at 25°C is measured using the method as disclosed in the description.

**12.** The method according to claim 11, wherein the propylene-ethylene copolymer (II) is as described in claim 7.

**13.** A sheet or membrane comprising the polyolefin composition according to any one of claims 1-10.

**14.** The sheet or membrane according to claim 13 comprising at least three layers X, Y and Z and having layers structure X/Z/Y, wherein the layer X and the layer Y comprise a polyolefin composition as described in any one of claims 1-9, and the layer Z is a reinforcing layer comprising a plastic material selected from the group consisting of propylene polymers, polyethylene, polyethylene terephthalate and combinations thereof.

**15.** Use of the sheet or membrane according to claim 13 or 14 for single-ply roofing or as geomembrane.

**Patentansprüche**

1. Eine Polyolefinzusammensetzung, umfassend:

(I) 50-95 Gew.-% einer heterophasischen Polyolefinzusammensetzung, umfassend:

(A) 10-40 Gew.-% eines Propylenpolymers, ausgewählt aus Propylenhomopolymeren oder Copolymeren von Propylen mit mindestens einem Alpha-Olefin der Formel $CH_2$ =CHR, wobei R H oder ein linearer oder verzweigter C2-C8-Alkylrest ist, wobei das Copolymer 1.0 bis 6.0 Gew.-%, bezogen auf das Gewicht von (A), an Einheiten umfasst, die von dem Alpha-Olefin abgeleitet sind und eine Schmelzflussrate ($MFR_A$ ) im Bereich von 20 bis 60 g/10 min. aufweist, gemessen gemäß ISO 1133, 230 °C, 2.16 kg; und
(B) 60-90 Gew.-% eines Copolymers aus Propylen mit mindestens einem Alpha-Olefin der Formel $CH_2$ =CHR und gegebenenfalls einem Dien, wobei R H oder ein linearer oder verzweigter C2-C8-Alkylrest ist und wobei das Copolymer 20-35 Gew.- %, bezogen auf das Gewicht von (B), an Einheiten enthält, die von dem Alpha-Olefin abgeleitet sind, wobei der Anteil des in Xylol bei 25 °C löslichen Copolymers (B) ($XS_B$ ) höher als 80 Gew.-% und niedriger als 97 Gew.-%, bezogen auf das Gewicht des Copolymers (B), ist,

wobei der Anteil der bei 25 °C in Xylol löslichen heterophasischen Polyolefinzusammensetzung (I) (XS(I)) gleich oder höher als 60 Gew.-% ist, wobei sich die Mengen von (A), (B) und XS(I) auf das Gesamtgewicht von (A)+(B) beziehen; und
(II) 5-50 Gew.-% eines Propylen-Ethylen-Copolymers, das 12-25 Gew.-% von Ethylen abgeleitete Einheiten enthält, bezogen auf das Gewicht des Propylen-Ethylen-Copolymers, wobei das Ethylen-Propylen-Copolymer (II) einen bei 25 °C in Xylol löslichen Anteil von mehr als 97 Gew.-%, bezogen auf das Gewicht des Copolymers (II), aufweist,

wobei die Mengen von (I) und (II) auf das Gesamtgewicht von (I) + (II) bezogen sind und der bei 25 °C in Xylol lösliche Anteil nach dem in der Beschreibung offenbarten Verfahren bestimmt wird.

2. Die Polyolefinzusammensetzung nach Anspruch 1, wobei das Propylenpolymer (A) 2.0-5.0 Gew.-%, vorzugsweise 2.8-4.8 Gew.-%, noch bevorzugter 3.0-4.0 Gew.-%, bezogen auf das Gewicht des Propylenpolymers (A), an Einheiten enthält, die von dem Alpha-Olefin abgeleitet sind.

3. Die Polyolefinzusammensetzung nach Anspruch 1 oder 2, wobei das Propylenpolymer (A) eine Schmelzflussrate ($MFR_A$ ) aufweist, gemessen gemäß ISO 1133, 230 °C, 2.16 kg, im Bereich von 25 bis 55 g/10 min, vorzugsweise von 25 bis 50 g/10 min.

4. Die Polyolefinzusammensetzung nach einem der Ansprüche 1 bis 3, wobei der Anteil der bei 25 °C in Xylol löslichen heterophasischen Polyolefinzusammensetzung (I) (XS(I)) höher als 65 Gew.-%, vorzugsweise höher als 70 Gew.-%, vorzugsweise im Bereich von 71 bis 90 Gew.-%, noch bevorzugter von 72 bis 80 Gew.-%, bezogen auf das Gesamtgewicht von (A)+(B), wobei der bei 25 °C in Xylol lösliche Anteil nach dem in der Beschreibung offenbarten Verfahren gemessen wird.

5. Die Polyolefinzusammensetzung gemäß einem der Ansprüche 1 bis 4, wobei der Anteil der bei 25 °C in Xylol löslichen heterophasischen Polyolefinzusammensetzung (I) eine intrinsische Viskosität XSIV(I) im Bereich von 2.0 bis 5.5 dl/g, vorzugsweise von 2.5 bis 4.5 dl/g, vorzugsweise von 3.1 bis 3.9 dl/g aufweist, wobei die intrinsische Viskosität nach dem in der Beschreibung offenbarten Verfahren gemessen wird.

6. Die Polyolefinzusammensetzung nach einem der Ansprüche 1-5, wobei das mindestens eine in Copolymer (B) enthaltene Alpha-Olefin aus der Gruppe ausgewählt ist, die aus Ethylen, Buten-1, Hexen-1, 4-Methylpenten-1, Octen-1 und Kombinationen davon besteht, wobei das Alpha-Olefin vorzugsweise Ethylen ist.

7. Die Polyolefinzusammensetzung nach einem der Ansprüche 1 bis 6, wobei das Propylen-Ethylen-Copolymer (II) ein Polyolefinelastomer ist, das mindestens eine der folgenden Eigenschaften aufweist:

- einen in Xylol bei 25 °C löslichen Anteil von mehr als 97 Gew.-%, vorzugsweise gleich oder größer als 99 Gew.-%, bezogen auf das Gewicht der Komponente (II), wobei der in Xylol bei 25 °C lösliche Anteil unter Verwendung des in der Beschreibung offenbarten Verfahrens gemessen wird; und/oder
- eine intrinsische Viskosität XSIV(II) der in Xylol bei 25 °C löslichen Fraktion von weniger als 2.00 dl/g,

vorzugsweise von 1.00 bis 2.00 dl/g, noch bevorzugter von 1.10 bis 1.80 dl/g, wobei die intrinsische Viskosität nach dem in der Beschreibung offenbarten Verfahren gemessen wird; und/oder
- Molekulargewichtsverteilung Mw/Mn von 1.5 bis 3.5, vorzugsweise von 1.8 bis 3.0, noch bevorzugter von 2.0 bis 2.8; und/oder
- Dichte von 0.840 bis 0.880 g/cm$^3$, vorzugsweise von 0.850 bis 0.870 g/cm$^3$, noch bevorzugter von 0.855 bis 0.865 g/cm$^3$; und/oder
- Shore-A-Härte unter 90, vorzugsweise unter 50, gemessen an formgepressten Platten gemäß der Methode ISO 868.

**8.** Die Polyolefinzusammensetzung nach Anspruch 1, umfassend:

(I) 50-95 Gew.-% einer heterophasischen Polyolefinzusammensetzung, umfassend:

(A) 10-40 Gew.-% eines Copolymers aus Propylen und Hexen-1, das 1.0-6.0 Gew.- %, bezogen auf das Gewicht der Komponente (A), an Einheiten enthält, die von Hexen-1 abgeleitet sind und eine Schmelzflussrate ($MFR_A$ ) im Bereich von 20 bis 60 g/10 min, gemessen gemäß ISO 1133, 230 °C, 2.16 kg; und
(B) 60-90 Gew.-% eines Copolymers aus Propylen und Ethylen, das 20-35 Gew.-% von Ethylen abgeleitete Einheiten enthält, bezogen auf das Gesamtgewicht der Komponente (B),
wobei

i) der Anteil der bei 25 °C in Xylol löslichen heterophasischen Polyolefinzusammensetzung (XS(I)) mehr als 65 Gew.-% beträgt, wobei der bei 25 °C in Xylol lösliche Anteil nach dem in der Beschreibung offenbarten Verfahren gemessen wird;
ii) die Mengen von (A), (B) und XS(I) auf das Gesamtgewicht von (A)+(B) bezogen sind; und
iii) der Schmelzindex (MFR(I)), gemessen gemäß ISO 1133 bei 230 °C und 2.16 kg der heterophasischen Polyolefinzusammensetzung (I), liegt im Bereich von 0.2 bis 6.0 g/10 min;

und

(II) 5-50 Gew.-% eines Propylen-Ethylen-Copolymers, das 12-25 Gew.-% von Ethylen abgeleitete Einheiten, bezogen auf das Gewicht des Propylen-Ethylen-Copolymers, umfasst,
wobei das Propylen-Ethylen-Copolymer aufweist:

iii) einen in Xylol bei 25 °C löslichen Anteil von mehr als 97 Gew.-%, bezogen auf das Gewicht der Komponente (II), wobei der in Xylol bei 25 °C lösliche Anteil unter Verwendung des in der Beschreibung offenbarten Verfahrens gemessen wird; und/oder
iv) eine intrinsische Viskosität XSIV(II) der bei 25 °C in Xylol löslichen Fraktion von weniger als 2.00 dl/g aufweist, wobei die intrinsische Viskosität nach dem in der Beschreibung offenbarten Verfahren gemessen wird; und/oder
v) Molekulargewichtsverteilung Mw/Mn von 1.5 bis 3.5; und/oder
vi) eine Dichte von 0.840 bis 0.880 g/cm$^3$; und/oder
vii) Shore-A-Wert von weniger als 90, gemessen an formgepressten Platten gemäß der Methode ISO 868,

und wobei die Mengen von (I) und (II) auf das Gesamtgewicht von (I)+(II) bezogen sind.

**9.** Die Polyolefinzusammensetzung gemäß einem der Ansprüche 1 bis 8, umfassend 65 bis 95 Gew.-%, vorzugsweise 75 bis 93 Gew.-%, der Komponente (I) und 5 bis 35 Gew.-%, vorzugsweise 7 bis 25 Gew.-%, der Komponente (II).

**10.** Die Polyolefinzusammensetzung nach einem der Ansprüche 1 bis 9, wobei die heterophasische Polyolefinzusammensetzung (I) 15 bis 35 Gew.-%, vorzugsweise 20 bis 30 Gew.-%, des Propylenpolymers (A) und 65 bis 85 Gew.-%, vorzugsweise 70 bis 80 Gew.- %, des Propylencopolymers (B) umfasst.

**11.** Verfahren zur Verbesserung der Weichheit einer heterophasischen Polyolefinzusammensetzung (I), wie in einem der Ansprüche 1 bis 10 beschrieben, umfassend das Hinzufügen, vorzugsweise das Schmelzmischen, zu der heterophasischen Polyolefinzusammensetzung (I) 5-50 Gew.-% eines Propylen-Ethylen-Copolymers (II), das 12-25 Gew.-% von Ethylen abgeleitete Einheiten, bezogen auf das Gewicht des Propylen-Ethylen-Copolymers, enthält, wobei das Propylen-Ethylen-Copolymer (II) einen in Xylol bei 25 °C löslichen Anteil von mehr als 97 Gew.-%, bezogen auf das Gewicht des Copolymers (II), aufweist, wobei der in Xylol bei 25 °C lösliche Anteil nach dem in der Beschreibung

offenbarten Verfahren gemessen wird.

**12.** Verfahren nach Anspruch 11, wobei das Propylen-Ethylen-Copolymer (II) wie in Anspruch 7 beschrieben ist.

**13.** Eine Folie oder Membran, die die Polyolefinzusammensetzung gemäß einem der Ansprüche 1 bis 10 umfasst.

**14.** Die Folie oder Membran gemäß Anspruch 13, die mindestens drei Schichten X, Y und Z umfasst und eine Schichtstruktur X/Z/Y aufweist, wobei die Schicht X und die Schicht Y eine Polyolefinzusammensetzung gemäß einem der Ansprüche 1 bis 9 umfassen und die Schicht Z eine Verstärkungsschicht ist, die ein Kunststoffmaterial umfasst, das aus der Gruppe ausgewählt ist, die aus Propylenpolymeren, Polyethylen, Polyethylenterephthalat und Kombinationen davon besteht.

**15.** Verwendung der Folie oder Membran gemäß Anspruch 13 oder 14 für einlagige Dachbahnen oder als Geomembran.

## Revendications

**1.** Composition de polyoléfine comprenant :

(I) 50 à 95 % en poids d'une composition de polyoléfine hétérophasique comprenant :

(A) 10 à 40 % en poids d'un polymère de propylène choisi parmi les homopolymères de propylène ou les copolymères de propylène avec au moins une alpha-oléfine de formule $CH_2$ =CHR, où R représente H ou un groupe alkyle en C2 à C8 linéaire ou ramifié, le copolymère comprenant 1.0 à 6.0 % en poids, par rapport au poids de (A), de motifs dérivés de l'alpha-oléfine et présentant un indice de fluidité à chaud ($MFR_A$ ) mesuré selon la norme ISO 1133, à 230 °C, sous une charge de 2.16 kg, compris entre 20 et 60 g/10 min ; et
(B) 60 à 90 % en poids d'un copolymère de propylène avec au moins une alpha-oléfine de formule $CH_2$ =CHR, et éventuellement un diène, où R représente H ou un groupe alkyle en C2-C8 linéaire ou ramifié, et dans lequel le copolymère comprend 20 à 35 % en poids, par rapport au poids de (B), d'unités dérivées de l'alpha-oléfine, la fraction du copolymère (B) soluble dans le xylène à 25 °C ($XS_B$ ) est supérieure à 80 % en poids et inférieure à 97 % en poids, par rapport au poids du copolymère (B), dans laquelle la fraction de la composition de polyoléfine hétérophasique (I) soluble dans le xylène à 25 °C (XS(I)) est égale ou supérieure à 60 % en poids, les quantités de (A), (B) et XS(I) étant rapportées au poids total de (A) + (B) ; et

(II) 5 à 50 % en poids d'un copolymère propylène-éthylène comprenant 12 à 25 % en poids de motifs dérivés de l'éthylène, par rapport au poids du copolymère propylène-éthylène, dans lequel le copolymère éthylène-propylène (II) présente une fraction soluble dans le xylène à 25 °C supérieure à 97 % en poids par rapport au poids du copolymère (II),

dans laquelle les quantités de (I) et (II) sont exprimées par rapport au poids total de (I) + (II) et la fraction soluble dans le xylène à 25 °C est mesurée selon la méthode décrite dans la description.

**2.** Composition de polyoléfine selon la revendication 1, dans laquelle le polymère de propylène (A) comprend 2.0 à 5.0 % en poids, de préférence 2.8 à 4.8 % en poids, plus préférablement 3.0 à 4.0 % en poids, par rapport au poids du polymère de propylène (A), d'unités dérivées de l'alpha-oléfine.

**3.** Composition de polyoléfine selon la revendication 1 ou 2, dans laquelle le polymère de propylène (A) présente un indice de fluidité à chaud ($MFR_A$ ) mesuré selon la norme ISO 1133, à 230 °C, avec une charge de 2.16 kg, compris entre 25 et 55 g/10 min, de préférence entre 25 et 50 g/10 min.

**4.** Composition de polyoléfine selon l'une quelconque des revendications 1 à 3, dans laquelle la fraction de la composition de polyoléfine hétérophasique (I) soluble dans le xylène à 25 °C (XS(I)) est supérieure à 65 % en poids, de préférence supérieure à 70 % en poids, de préférence comprise entre 71 et 90 % en poids, plus préférablement entre 72 et 80 % en poids, par rapport au poids total de (A) + (B), la fraction soluble dans le xylène à 25 °C étant mesurée selon la méthode décrite dans la description.

**5.** Composition de polyoléfine selon l'une quelconque des revendications 1 à 4, dans laquelle la fraction de la composition de polyoléfine hétérophasique (I) soluble dans le xylène à 25 °C présente une viscosité intrinsèque

XSIV(I) comprise entre 2.0 et 5.5 dl/g, de préférence entre 2.5 et 4.5 dl/g, de préférence de 3.1 à 3.9 dl/g, la viscosité intrinsèque étant mesurée selon la méthode décrite dans la description.

**6.** Composition de polyoléfine selon l'une quelconque des revendications 1 à 5, dans laquelle la au moins une alpha-oléfine comprise dans le copolymère (B) est choisie dans le groupe constitué par l'éthylène, le butène-1, l'hexène-1, le 4-méthylpentène-1, l'octène-1 et leurs combinaisons, l'alpha-oléfine étant de préférence l'éthylène.

**7.** Composition de polyoléfine selon l'une quelconque des revendications 1 à 6, dans laquelle le copolymère propylène-éthylène (II) est un élastomère de polyoléfine présentant au moins l'une des propriétés suivantes :

- une fraction soluble dans le xylène à 25 °C supérieure à 97 % en poids, de préférence égale ou supérieure à 99 % en poids, par rapport au poids du composant (II), la fraction soluble dans le xylène à 25 °C étant mesurée selon la méthode décrite dans la description ; et/ou
- une viscosité intrinsèque XSIV(II) de la fraction soluble dans le xylène à 25 °C inférieure à 2.00 dl/g, de préférence comprise entre 1.00 et 2.00 dl/g, et de manière encore plus préférable entre 1.10 et 1.80 dl/g, la viscosité intrinsèque étant mesurée selon la méthode décrite dans la description ; et/ou
- une distribution de poids moléculaire Mw/Mn comprise entre 1.5 et 3.5, de préférence entre 1.8 et 3.0, et de manière encore plus préférable entre 2.0 et 2.8 ; et/ou
- une densité comprise entre 0.840 et 0.880 g/$cm^3$, de préférence entre 0.850 et 0.870 g/$cm^3$, de préférence encore entre 0.855 et 0.865 g/$cm^3$; et/ou
- une valeur Shore A inférieure à 90, de préférence inférieure à 50, mesurée sur des plaques moulées par compression selon la méthode ISO 868.

**8.** Composition de polyoléfine selon la revendication 1, comprenant :

(I) 50 à 95 % en poids d'une composition de polyoléfine hétérophasique comprenant :

(A) 10 à 40 % en poids d'un copolymère de propylène et d'hexène-1 comprenant 1,0 à 6,0 % en poids, par rapport au poids du composant (A), d'unités dérivées de l'hexène-1 et présentant un indice de fluidité à chaud ($MFR_A$ ) mesuré selon la norme ISO 1133, à 230 °C, avec une charge de 2.16 kg, compris entre 20 et 60 g/10 min ; et
(B) 60 à 90 % en poids d'un copolymère de propylène et d'éthylène comprenant 20 à 35 % en poids de motifs dérivés de l'éthylène, par rapport au poids total du composant (B),
dans laquelle

i) la fraction de la composition de polyoléfine hétérophasique soluble dans le xylène à 25 °C (XS(I)) est supérieure à 65 % en poids, la fraction soluble dans le xylène à 25 °C étant mesurée selon la méthode décrite dans la description ;
ii) les quantités de (A), (B) et XS(I) sont rapportées au poids total de (A) + (B) ; et
iii) l'indice de fluidité à chaud (MFR(I)), mesuré conformément à la norme ISO 1133 à 230 °C avec une charge de 2.16 kg de la composition de polyoléfine hétérophasique (I), est compris entre 0.2 et 6.0 g/10 min ;

et

(II) 5 à 50 % en poids d'un copolymère propylène-éthylène comprenant 12 à 25 % en poids de motifs dérivés de l'éthylène, par rapport au poids du copolymère propylène-éthylène,
dans lequel le copolymère propylène-éthylène présente :

iii) une fraction soluble dans le xylène à 25 °C supérieure à 97 % en poids par rapport au poids du composant (II), la fraction soluble dans le xylène à 25 °C étant mesurée selon la méthode décrite dans la description ; et/ou
iv) une viscosité intrinsèque XSIV(II) de la fraction soluble dans le xylène à 25 °C inférieure à 2.00 dl/g, la viscosité intrinsèque étant mesurée selon la méthode décrite dans la description ; et/ou
v) une distribution de poids moléculaire Mw/Mn comprise entre 1.5 et 3.5 ; et/ou
vi) une densité comprise entre 0.840 et 0.880 g/$cm^3$; et/ou
vii) une valeur Shore A inférieure à 90, mesurée sur des plaques moulées par compression selon la méthode ISO 868,

et dans laquelle les quantités de (I) et (II) sont rapportées au poids total de (I) + (II).

**9.** Composition de polyoléfine selon l'une quelconque des revendications 1 à 8, comprenant 65 à 95 % en poids, de préférence 75 à 93 % en poids, du composant (I) et 5 à 35 % en poids, de préférence 7 à 25 % en poids, du composant (II).

**10.** Composition de polyoléfine selon l'une quelconque des revendications 1 à 9, dans laquelle la composition de polyoléfine hétérophasique (I) comprend 15 à 35 % en poids, de préférence 20 à 30 % en poids, du polymère de propylène (A) et 65 à 85 % en poids, de préférence 70 à 80 % en poids, du copolymère de propylène (B).

**11.** Procédé pour améliorer la souplesse d'une composition de polyoléfine hétérophasique (I) telle que décrite dans l'une quelconque des revendications 1 à 10, comprenant l'ajout, de préférence par mélange à l'état fondu, à la composition de polyoléfine hétérophasique (I) 5 à 50 % en poids d'un copolymère de propylène-éthylène (II) comprenant 12 à 25 % en poids de motifs dérivés de l'éthylène par rapport au poids du copolymère de propylène-éthylène, le copolymère propylène-éthylène (II) ayant une fraction soluble dans le xylène à 25 °C supérieure à 97 % en poids par rapport au poids du copolymère (II), dans lequel la fraction soluble dans le xylène à 25 °C est mesurée selon la méthode décrite dans la description.

**12.** Procédé selon la revendication 11, dans lequel le copolymère propylène-éthylène (II) est tel que décrit dans la revendication 7.

**13.** Feuille ou membrane comprenant la composition de polyoléfine selon l'une quelconque des revendications 1 à 10.

**14.** Feuille ou membrane selon la revendication 13, comprenant au moins trois couches X, Y et Z et présentant une structure de couches X/Z/Y, dans laquelle la couche X et la couche Y comprennent une composition de polyoléfine telle que décrite dans l'une quelconque des revendications 1 à 9, et la couche Z est une couche de renfort comprenant une matière plastique choisie dans le groupe constitué par les polymères de propylène, le polyéthylène, le polyéthylène téréphtalate et leurs combinaisons.

**15.** Utilisation de la feuille ou de la membrane selon la revendication 13 ou 14 pour une toiture monocouche ou en tant que géomembrane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03076509 A
- WO 2009080485 A
- US 2005222314 A1
- WO 9837144 A
- WO 2015055433 A
- US 9434827 B2
- US 10669414 B2
- EP 45977 A2
- EP 395083 A2
- WO 98056830 A
- WO 98056833 A
- WO 98056834 A
- WO 0055215 A
- WO 0063261 A
- WO 2010078494 A
- US 7388061 B
- EP 361493 A
- EP 728769 A
- WO 02100904 A
- WO 0757160 A
- WO 2011061134 A
- US 4399054 A
- US 4469648 A
- WO 9844009 A1
- EP 472946 A
- WO 03011962 A
- EP 395083 A


### Non-patent literature cited in the description


- **HUGGINS, M.L.** *J. Am. Chem. Soc.*, 1942, vol. 64 (11), 2716-2718
- **C. J. CARMAN** ; **R. A. HARRINGTON** ; **C. E. WILKES**. *Macromolecules*, 1977, vol. 10 (3), 536
- **M. KAKUGO** ; **Y. NAITO** ; **K. MIZUNUMA** ; **T. MIYATAKE**. *Macromolecules*, 1982, vol. 15 (4), 1150-1152